# EUROPEAN PATENT APPLICATION

(11) **EP 2 712 270 A1**
(43) Date of publication of application: **26.03.2014**
(21) Application number: 13158660.4
(22) Date of filing: 11.03.2013
(51) Int. Cl.: H05B 33/08, H02M 1/42

(54) **Power supply device for lighting and luminaire**

(30) Priority: 20.09.2012 JP 2012207306
(71) Applicant: Toshiba Lighting & Technology Corporation, Yokosuka-shi Kanagawa 237-8510 (JP)
(72) Inventor: Otake, Hirokazu, Kanagawa, 237-8510 (JP); Ooto, Katsuya, Tokyo, 198-0024 (JP)
(74) Representative: Willquist, Sofia Ellinor

(57) **Abstract**

In a power supply device (1), power factor improving circuits (15, 16) are connected to an external power supply and configured to supply electric power to a driving circuit (19), improve a power factor of an input current to the driving circuit (19), and perform an interleave operation. The driving circuit (19) subjects an LED (111) to lighting control.

## Description

### FIELD

Embodiments described herein relate generally to a power supply device for lighting and a luminaire.

### BACKGROUND

As a power supply device for various electronic apparatuses, there is known a power supply device including a rectifying circuit such as a diode bridge circuit and a smoothing circuit such as a capacitor and configured to convert an alternating-current voltage into a direct-current voltage.

Among power supply devices in the past, there is a power supply device including a power factor improving circuit in order to improve a power factor. The power factor improving circuit includes, for example, a coil and a diode and a switching element connected to the coil in parallel. The switching element is switched at appropriate timing and an electric current flowing to a power supply circuit is formed in a shape similar to a sine wave of an alternating-current voltage to improve the power factor.

However, in the power supply device in the past, a large commercial frequency residue, i.e., a ripple voltage occurs in an output voltage of the power factor improving circuit.

### DESCRIPTION OF THE DRAWINGS

FIG. 1 is a block diagram showing an example of a power supply device according to a first embodiment;
FIG. 2 is a diagram showing an example of a rush current restricting circuit;
FIG. 3 is a diagram showing an example of a power factor improving circuit;
FIG. 4 is a block diagram showing an example of a power supply device according to a second embodiment; and
FIG. 5 is a diagram for explaining a multiphase operation mode and a single phase operation mode.

### DETAILED DESCRIPTION

An object of embodiments disclosed herein is to provide a power supply device for lighting and a luminaire that reduce a ripple voltage and improve a power factor.

In a first embodiment explained below, in a power supply device 1, power factor improving circuits 15 and 16 improve a power factor of an input current to a driving circuit 19 and perform an interleave operation. The interleave operation means that the power factor improving circuit 15 and the power factor improving circuit 16 operate in operation phases shifted from each other. By performing the interleave operation, it is possible to reduce a large commercial frequency residue, i.e., a ripple voltage that occurs in an output voltage of the power factor improving circuits.

In the power supply device 1, one end of a capacitor 17 is connected to a connection line for a rectifying circuit 11 and the power factor improving circuit 15 and a connection line for a rectifying circuit 12 and the power factor improving circuit 16. That is, since the capacitor 17 is shared by a first system and a second system, it is possible to stabilize the potential at input stages to the power factor improving circuits 15 and 16.

In a second embodiment, in a power supply device 50, a control section 51 switches, on the basis of a dimming degree indicated by a dimming signal, the power factor improving circuit 15 and the power factor improving circuit 16 to a first mode in which both the power factor improving circuit 15 and the power factor improving circuit 16 operate (i.e., a multiphase operation mode) or a second mode in which the power factor improving circuit 15 operates and the power factor improving circuit 16 stops (i.e., a single phase operation mode). That is, the control section 51 switches, on the basis of the dimming degree indicated by the dimming signal, the number of the power factor improving circuits 15 and 16 that are in an operation state. Therefore, if the dimming degree is high, i.e., during a low output, the control section 51 can reduce a fixed loss such as a winding iron loss by switching the power factor improving circuit 15 and the power factor improving circuit 16 to the single phase operation mode and stopping the power factor improving circuit 16. If the dimming degree is low, i.e., during a high output, the control section 51 can reduce a power loss by switching the power factor improving circuit 15 and the power factor improving circuit 16 to the multiphase operation mode and performing power sharing.

Power supply devices and luminaries according to embodiments are explained below with reference to the drawings. In the embodiments, components having the same functions are denoted by the same reference numerals and signs and redundant explanation of the components is omitted.

### First Embodiment

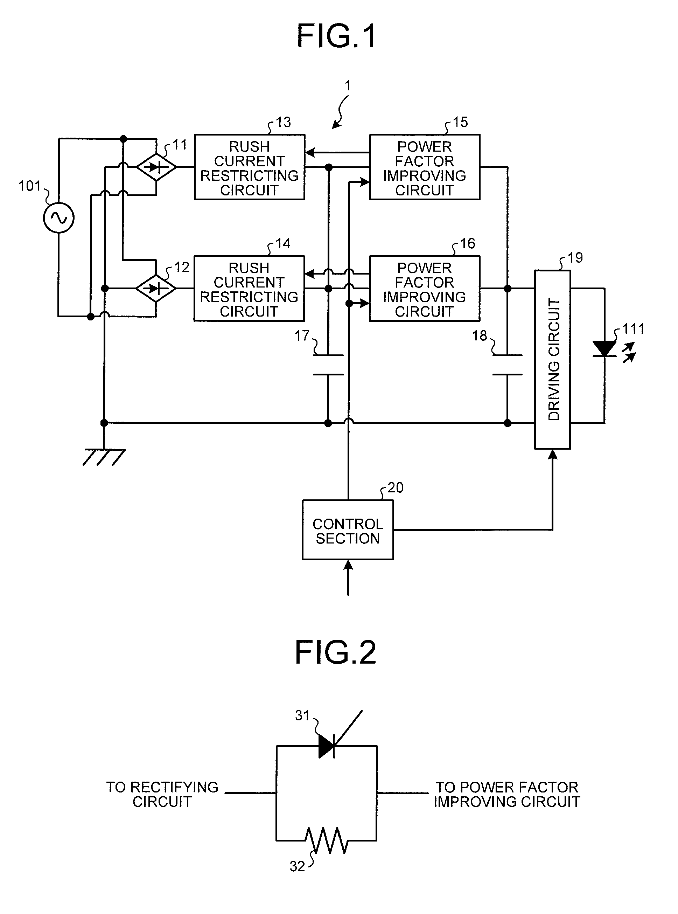

FIG. 1 is a block diagram showing an example of a power supply device according to a first embodiment. In FIG. 1, a power supply device 1 includes rectifying circuits 11 and 12, rush current restricting circuits 13 and 14, power factor improving circuits 15 and 16, capacitors 17 and 18, a driving circuit 19, and a control section 20. In FIG. 1, a luminaire including the power supply device 1 and an LED 111, which is a light-emitting element, is shown. The LED 111 is connected to an output terminal (not shown in the figure) of the power supply device 1.

Each of the rectifying circuits 11 and 12 is a diode bridge circuit for subjecting an alternating-current voltage to full wave rectification. The rectifying circuits 11 and 12 are connected to an alternating-current power supply 101 in parallel. The rectifying circuits 11 and 12 receive an input of the alternating-current voltage and output pulsating currents respectively to the rush current restricting circuits 13 and 14.

The rush current restricting circuit 13 is connected to an output side of the rectifying circuit 11 and an input side of the power factor improving circuit 15 and connected to the rectifying circuit 11 and the power factor improving circuit 15 in series. Similarly, the rush current restricting circuit 14 is connected to an output side of the rectifying circuit 12 and an input side of the power factor improving circuit 16 and connected to the rectifying circuit 12 and the power factor improving circuit 16 in series. Both of a connection point of the rush current restricting circuit 13 and the power factor improving circuit 15 and a connection point of the rush current restricting circuit 14 and the power factor improving circuit 16 are connected to one end of the capacitor 17.

The rush current restricting circuits 13 and 14 restrict an electric current generated during power-on from rushing into the capacitors 17 and 18.

Specifically, each of the rush current restricting circuits 13 and 14 includes, as shown in FIG. 2, for example, a thyristor 31 and a resistor 32 connected in parallel. FIG. 2 is a diagram showing an example of a rush current restricting circuit. In a power-on start period, since a control signal from the control section 20 is not input to a gate of the thyristor 31, the thyristor 31 is not short-circuited. An electric current flowing to the capacitors 17 and 18 can be limited by the resistor 32. On the other hand, after the elapse of the power-on start period, the control signal from the control section 20 is received, whereby the power factor improving circuits 15 and 16 are started up and the thyristors 31 of the rush current restricting circuits 13 and 14 are short-circuited. The electric current can flow into the capacitors 17 and 18 without being restricted by the rush current restricting circuits 13 and 14.

As explained above, one end of the capacitor 17 is connected to both of the connection point of the rush current restricting circuit 13 and the power factor improving circuit 15 and the connection point of the rush current restricting circuit 14 and the power factor improving circuit 16. The other end of the capacitor 17 is connected to the ground.

The capacitor 17 is a bypass capacitor that bypasses a high-frequency current formed by the power factor improving circuits 15 and 16. The capacitor 17 has a function of removing noise included in an electric current.

Each of the power factor improving circuits 15 and 16 is connected to one end of the capacitor 18 on an output side.

The power factor improving circuits 15 and 16 form an output current in a shape similar to a sine wave of an alternating-current voltage to thereby improve a power factor.

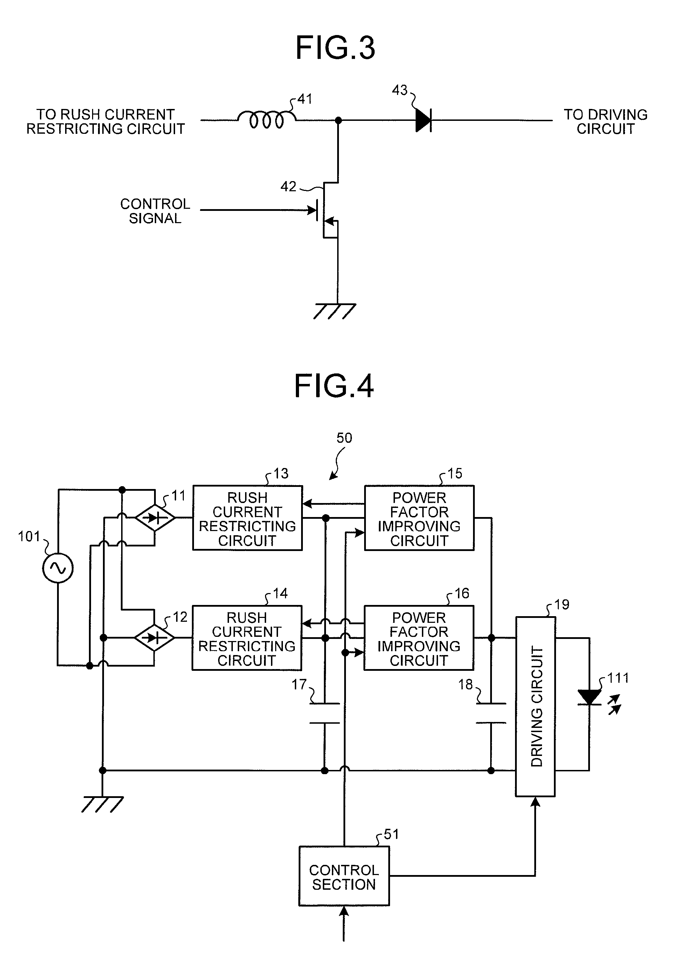

Specifically, each of the power factor improving circuits 15 and 16 includes, as shown in FIG. 3, for example, a coil 41, a switching element 42, and a diode 43. FIG. 3 is a diagram showing an example of a power factor improving circuit. The switching element 42 is, for example, a power MOSFET. One end of the coil 41 is connected to the rush current restricting circuits 13 and 14 side. The other end of the coil 41 is connected to an anode of the diode 43 in series. A drain of the switching element 42 is connected to a connection point of the coil 41 and the diode 43. A source of the switching element 42 is connected to the ground. A gate of the switching element 42 is connected to the control section 20. If the switching element 42 is off, an electric current input to the power factor improving circuits 15 and 16 is output to the capacitor 18 at a post stage via the coil 41 and the diode 43. On the other hand, if the switching element 42 is on according to a control signal from the control section 20, the electric current input to the power factor improving circuits 15 and 16 flows to the ground via the coil 41 and the switching element 42. Charges accumulated in the capacitor 18 are prevented from flowing to the ground by the diode 43.

As explained above, a first system (i.e., a first unit) including the rectifying circuit 11, the rush current restricting circuit 13, and the power factor improving circuit 15 and a second system (i.e., a second unit) including the rectifying circuit 12, the rush current restricting circuit 14, and the power factor improving circuit 16 are configured.

The first system and the second system share one capacitor 17. Therefore, it is possible to stabilize the potential at the input stages to the power factor improving circuits 15 and 16. If the first system and the second system are respectively connected to different bypass capacitors, one bypass capacitor destabilizes the potential of the other bypass capacitor. If the first system and the second system are respectively connected to different bypass capacitors and operate independently from each other, it is difficult to cause the first system and the second system to operate in synchronization with each other. Therefore, the first system and the second system share a bypass capacitor, whereby the potential at the input stages to the power factor improving circuits 15 and 16 is stabilized and a synchronized operation of the first system and the second system is enabled.

A control signal input to the power factor improving circuit 15 and a control signal input to the power factor improving circuit 16 are phase-shifted. That is, timings of HIGH and LOW are shifted. In the power factor improving circuit 15 and the power factor improving circuit 16, timing when the switching element 42 is turned on shifts. That is, the power factor improving circuit 15 and the power factor improving circuit 16 perform an interleave operation. Therefore, it is possible to reduce a large commercial frequency residue, i.e., a ripple voltage that occurs in an output voltage of the power factor improving circuits. The control signal input to the power factor improving circuit 15 and the control signal input to the power factor improving circuit 16 are phase-shifted by 180 degrees.

As explained above, one end of the capacitor 18 is connected to the output side of the power factor improving circuits 15 and 16 and the other end of the capacitor 18 is connected to the ground.

The capacitor 18 accumulates or discharges charges output from the power factor improving circuits 15 and 16 and functions as a smoothing circuit. A voltage smoothed by the capacitor 18 is output to the driving circuit 19.

The driving circuit 19 is connected to both the ends of the capacitor 18 in parallel.

The smoothed voltage is input to the driving circuit 19 from the capacitor 18. The driving circuit 19 receives a current control signal from the control section 20 and outputs a direct current corresponding to the current control signal to a power supply target using the input voltage. The power supply target is the LED 111.

After the elapse of the power-on start period, the control section 20 outputs control signals to the power factor improving circuits 15 and 16 and the rush current restricting circuits 13 and 14. Consequently, the power factor improving circuits 15 and 16 are started up and the thyristors 31 of the rush current restricting circuits 13 and 14 are short-circuited. The control section 20 receives an input of a dimming signal corresponding to, for example, the operation of a user on an operation section and outputs a current control signal corresponding to a dimming degree indicated by the dimming signal to the driving circuit 19. The dimming degree indicates a dimming level of the LED 111, which is the power supply target. The dimming degree is 0% if the LED 111 is fully lit. The dimming degree is 100% if the LED 111 is extinguished. That is, as the LED 111 is lit brighter, the dimming degree is lower and, as the LED 111 is lit darker, the dimming degree is higher.

As explained above, according to the first embodiment, in the power supply device 1, the power factor improving circuits 15 and 16 improve the power factor of the input current to the driving circuit 19 and perform the interleave operation. Therefore, it is possible to reduce a large commercial frequency residue, i.e., a ripple voltage that occurs in an output voltage of the power factor improving circuits.

In the power supply device 1, one end of the capacitor 17 is connected to the connection line for the rectifying circuit 11 and the power factor improving circuit 15 and the connection line for the rectifying circuit 12 and the power factor improving circuit 16. That is, since the capacitor 17 is shared by the first system and the second system, it is possible to stabilize the potential at the input stages to the power factor improving circuits 15 and 16.

### Second Embodiment

In a second embodiment, a multiphase operation mode in which both a first system and a second system operate and a single phase operation mode in which the first system or the second system operates and the other system stops are switched according to a dimming degree of a dimming signal.

FIG. 4 is a block diagram showing an example of a power supply device according to the second embodiment. In FIG. 4, a power supply device 50 includes a control section 51.

The control section 51 switches the power factor improving circuit 15 and the power factor improving circuit 16 to the multiphase operation mode and the single phase operation mode according to a dimming degree indicated by a dimming signal.

Specifically, if the dimming degree indicated by the dimming signal is equal to or larger than a threshold, the control section 51 switches the power factor improving circuit 15 and the power factor improving circuit 16 to the multiphase operation mode. If the dimming degree indicated by the dimming signal is smaller than the threshold, the control section 51 switches the power factor improving circuit 15 and the power factor improving circuit 16 to the single phase operation mode. A value of the threshold is a value larger than 50% and, preferably, is a predetermined value between 60% and 70%.

Specifically, if the dimming degree indicated by the dimming signal is equal to or larger than the threshold, the control section 51 outputs control signals to both the power factor improving circuits 15 and 16. On the other hand, if the dimming degree indicated by the dimming signal is smaller than the threshold, the control section 51 outputs a control signal to only the power factor improving circuit 15 or the power factor improving circuit 16 and does not output a control signal to the other power factor improving circuit. Consequently, only one power factor improving circuit is started up and the other power factor improving circuit is stopped. For example, only the power factor improving circuit 15 is started up and the power factor improving circuit 16 is stopped.

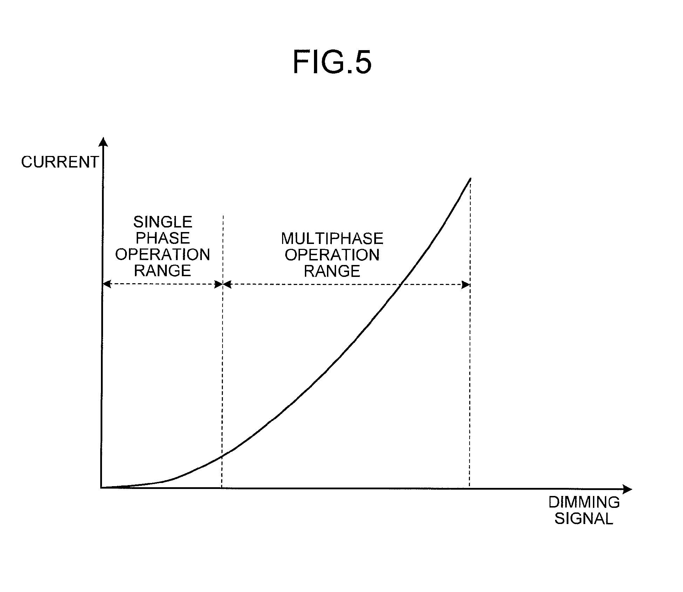

FIG. 5 is a diagram for explaining the multiphase operation mode and the single phase operation mode. In FIG. 5, the abscissa indicates a signal level of a dimming signal and the ordinate indicates a current flowing to the LED 111. As shown in FIG. 5, if the signal level of the dimming signal during full lighting is set to 100%, the multiphase operation mode and the single phase operation mode are switched at the signal level of the dimming signal between 30% and 40%. If the signal level of the dimming signal is low, i.e., if the dimming degree is high, the power factor improving circuit 15 and the power factor improving circuit 16 are switched to the single phase operation mode and, on the other hand, if the signal level of the dimming signal is high, i.e., the dimming degree is low, the power factor improving circuit 15 and the power factor improving circuit 16 are switched to the multiphase operation mode.

As explained above, according to the second embodiment, in the power supply device 50, the control section 51 switches, on the basis of the dimming degree of the dimming signal, the power factor improving circuit 15 and the power factor improving circuit 16 to the first mode (i.e., the multiphase operation mode) in which both the power factor improving circuit 15 and the power factor improving factor 16 operate or the second mode (i.e., the single phase operation mode) in which one power factor improving circuit (e.g., the power factor improving circuit 15) operates and the other power factor improving circuit (e.g., the power factor improving circuit 16) stops. That is, the control section 51 switches, on the basis of the dimming degree indicated by the dimming signal, the number of the power factor improving circuits 15 and 16 that are in an operation state. Therefore, if the dimming degree is high, i.e., during a low output, the control section 51 can reduce a fixed loss such as a winding iron loss by switching the power factor improving circuit 15 and the power factor improving circuit 16 to the single phase operation mode and stopping at least one power factor improving circuit. If the dimming degree is low, i.e., during a high output, the control section 51 can reduce a power loss by switching the power factor improving circuit 15 and the power factor improving circuit 16 to the multiphase operation mode and performing power sharing.

In the above explanation, the control section switches the multiphase operation mode and the single phase operation mode. However, the switching of the multiphase operation mode and the single phase operation mode is not limited to this. For example, the power factor improving circuits 15 and 16 may autonomously switch to the multiphase operation mode or the single phase operation mode according to load power of the LED 111, which is the power supply target.

As explained above, according to the first and second embodiments, it is possible to reduce a ripple voltage while improving a power factor.

### Other Embodiments

[1] In the explanation of the first and second embodiments, the two systems, i.e., the first system and the second system are provided. However, systems are not limited to the two systems. Three or more systems may be provided. In this case, operation phases are different in all the systems. Specifically, an operation phase difference among the systems is set to, for example, 360 degrees/the number of systems rather than 180 degrees.
[2] In the first and second embodiments, the current supply target is explained as the LED. However, the current supply target is not limited to this. The current supply target may be an electronic device that requires a fixed current, for example, an organic EL.
   While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. A power supply device (1, 50) for lighting comprising:
a lighting device (19) configured to subject a light-emitting element (111) to lighting control; and
a plurality of power factor improving circuits (15, 16) connected to an external power supply (101) and configured to supply electric power to the lighting device (19) and perform an interleave operation each other.

2. The device (1, 50) according to claim 1, further comprising:
a plurality of rectifying circuits (11, 12) respectively provided to correspond to the plurality of power factor improving circuits (15, 16) and configured to rectify an alternating current input from the external power supply (101); and
a bypass capacitor (17), one end of which is connected to a connection line for one power factor improving circuit (15, 16) and one rectifying circuit (11, 12) or a connection line for the other power factor improving circuit (15, 16) and the other rectifying circuit (11, 12).

3. The device (50) according to claim 1 or claim 2, further comprising a control section (20) configured to change, on the basis of a dimming signal or load power of the light-emitting element (111), a number of the power factor improving circuits (15, 16) that the control section (20) causes to operate.

4. The device (50) according to claim 1 or claim 2, further comprising a control section (20) configured to switch, on the basis of a dimming signal and load power of the light-emitting element (111), a first mode in which all the power factor improving circuits (15, 16) operate and a second mode in which at least one power factor improving circuit (15, 16) stops.

5. A luminaire comprising:
a light-emitting element (111); and
the power supply device (1, 50) according to any one of claims 1 - 4.
